# FASCICULE DE BREVET EUROPEEN

(11) **EP 4 117 318 B1**
(45) Date de publication et mention de la délivrance du brevet: **16.09.2026**
(21) Numéro de dépôt: 22183481.5
(22) Date de dépôt: 07.07.2022
(51) Int. Cl.: H04W 4/029, G01S 5/02, H04W 64/00

(54) **DÉTERMINATION DE TRAJECTOIRES À PARTIR DE DONNÉES DE TÉLÉPHONIE MOBILE**
BESTIMMUNG VON FLUGBAHNEN ANHAND VON MOBILFUNKDATEN
DETERMINATION OF TRAJECTORIES FROM MOBILE TELEPHONE DATA

(30) Priorité: 08.07.2021 FR 2107437
(43) Date de publication de la demande: 11.01.2023
(73) Titulaire: Université Gustave Eiffel, 77454 Marne-la-Vallée Cedex 2 (FR); Ecole Nationale Des Travaux Publics De L'etat (ENTPE), 69518 Vaulx en Velin Cedex (FR); IMDEA NetWorks Institute, 28918 Leganés, Madrid (ES)
(72) Inventeur: EL FAOUZI, Nour-Eddin, 69500 Bron (FR); FURNO, Angelo, 69003 Lyon (FR); BONNETAIN, Loïc, 69003 Lyon (FR); FIORE, Marco, 28224 Pozuelo de Alarcon (ES)
(74) Mandataire: Plasseraud IP

(56) Documents cités:
- US-A1- 2020 107 163
- WU WEI ET AL: "Oscillation Resolution for Mobile Phone Cellular Tower Data to Enable Mobility Modelling", 2014 IEEE 15TH INTERNATIONAL CONFERENCE ON MOBILE DATA MANAGEMENT, IEEE, vol. 1, 14 July 2014 (2014-07-14), pages 321 - 328, XP032656066, [retrieved on 20141005], DOI: 10.1109/MDM.2014.46

## Description

### Domaine technique

Le présent document se rapporte au domaine de détermination de trajectoires à partir de données de téléphonie mobile. Plus précisément, la présente invention se rapporte à un procédé de détermination d'un ensemble de trajectoires d'un utilisateur portant un appareil de téléphonie mobile, à un dispositif de traitement de données permettant la mise en œuvre de ce procédé, à un programme d'ordinateur comprenant des instructions qui permettent la mise en œuvre du procédé et à un support d'enregistrement lisible par ordinateur comprenant des instructions qui permettent à un ordinateur de mettre en œuvre le procédé.

### Technique antérieure

Afin de comprendre et d'analyser la mobilité de la population en zone urbaine, les enquêtes sur les ménages ont été la seule source de données pour déterminer les trajectoires de déplacement des individus de la population. D'autres sources de données existent aujourd'hui telles que les cartes à puce, le système de positionnement global (GPS), les réseaux sociaux géolocalisés ou les enregistrements de téléphones mobiles. US2020107163 concerne un procédé de détermination de la trajectoire à partir de données mobiles d'un appareil.

L'article "Oscillation Resolution for Mobile Phone Cellular Tower Data to Enable Mobility Modelling" de WU WEI et AL., 2014-07-14 décrit des heuristiques pour supprimer les oscillations se produisant lorsque le téléphone bascule de façon intermittente entre plusieurs antennes.

Parmi les nouvelles sources de données sur la mobilité, les données de signalisation des appareils mobiles émis par les opérateurs de réseaux mobiles constituent une option privilégiée pour suivre la trajectoire des appareils mobiles connectés à ces réseaux mobiles. En effet, ces données de signalisation sont disponibles pour l'ensemble des abonnés d'un fournisseur de réseau, ce qui couvre généralement un nombre important d'utilisateurs d'environ des dizaines ou des centaines de millions d'utilisateurs. Ces données de signalisation sont collectées en continu sur de longues périodes, ce qui permet des études de mobilité sur des mois ou des années. En outre, ces données de signalisation sont collectées de façon passives dans le cadre de la facturation des utilisateurs, et ne nécessitent donc pas un dispositif particulier pour les collecter. Cependant, ces données de signalisation manquent de précision en termes de localisation géographique et temporelle. En effet, l'emplacement de l'appareil mobile à partir des données de signalisation ne peut être mis en correspondance qu'avec la zone de couverture dudit appareil mobile ou la position des antennes avec lesquelles il communique. En outre, la fréquence d'acquisition des données est conditionnée par la fréquence de communication de l'appareil mobile soit des appels téléphoniques, l'échange de message texte ou de données internet, etc. qui restent des évènements sporadiques. Enfin, le nombre de données de signalisation collecté est important et nécessite des ressources de calcul importantes.

En conséquence, les données de signalisation présentent une source prometteuse pour suivre la mobilité des personnes en zone urbaine mais il existe un besoin de méthodes pour déduire la localisation des personnes de façon précise et fiable à partir de ces données de signalisation.

### Résumé

L'invention a pour objet ce qui est décrit dans les revendications indépendantes. Des modes de réalisation avantageux sont définis dans les revendications dépendantes. D'autres exemples sont fournis pour faciliter la compréhension de l'invention.

### Brève description des dessins

D'autres caractéristiques, détails et avantages apparaîtront à la lecture de la description détaillée ci-après, et à l'analyse des dessins annexés, sur lesquels :
[Fig. 1] La figure 1 illustre schématiquement une trajectoire, obtenue par géolocalisation, d'un utilisateur portant un appareil mobile connecté à un réseau de téléphonie mobile ;
[Fig. 2] La figure 2 montre un schéma bloc d'un exemple des étapes de traitement des données de signalisation de l'appareil mobile pour déterminer une trajectoire de l'utilisateur portant l'appareil mobile ;
[Fig. 3] La figure 3 montre un schéma bloc d'un exemple des étapes de détermination de la trajectoire de l'utilisateur à partir des données de signal après leur traitement par les étapes de la figure 2 ;
[Fig. 4] La figure 4a illustre les données de signalisation brutes pour un utilisateur et ces les données de signalisation après leur traitement par les étapes de la figure 2,
[Fig. 5] La figure 5 montre un ensemble de trajectoires récurrentes obtenues par les étapes de la figure 3.
[Fig. 6] La figure 6 montre une trajectoire de l'utilisateur déterminée selon les étapes de la figure 3 en comparaison avec la trajectoire réelle de l'utilisateur obtenue par géolocalisation.

### Description détaillée

Sur les figures, les mêmes références désignent des éléments identiques ou analogues.

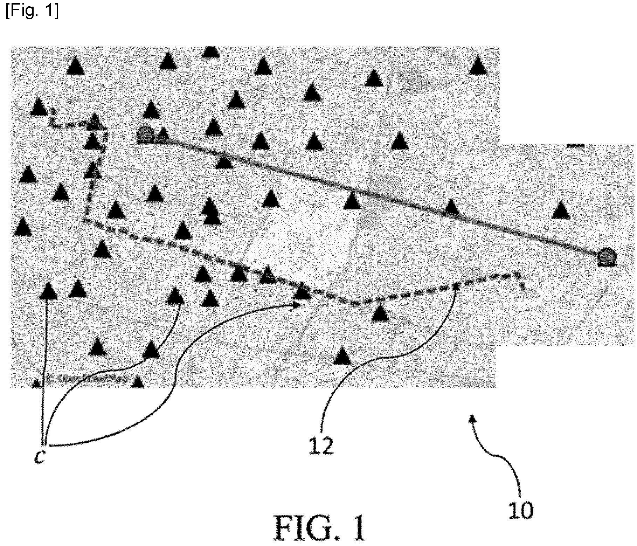

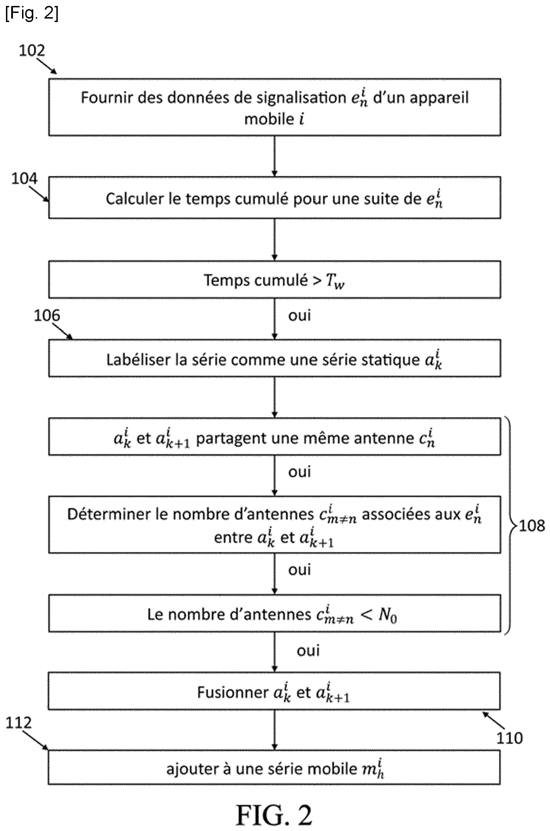

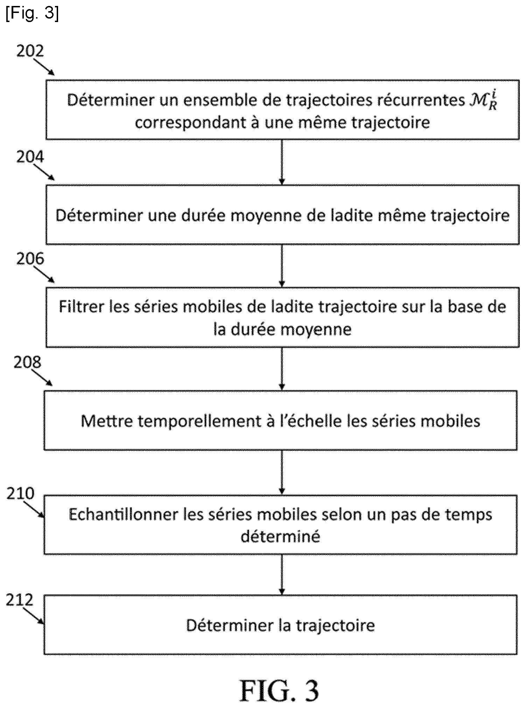

En référence aux figures 1 à 3, un utilisateur portant un appareil mobile i se déplace dans une zone urbaine 10 selon une trajectoire 12 obtenue par un système de géolocalisation telle que par GPS (« Global Positioning System » en anglais). L'appareil mobile i peut communiquer avec une pluralité d'antennes c d'un réseau de téléphonie mobile couvrant la zone urbaine 10. Les communications de l'appareil mobile avec le réseau de téléphonie mobile génèrent des données de signalisation ${e}_{n}^{i}$, avec *n* un entier, qui sont collectées et stockées dans des bases de données, par exemple par le fournisseur du réseau de téléphonie mobile. Les figures 2 et 3 représentent les étapes d'un exemple du procédé de détermination d'une ou plusieurs trajectoires de l'utilisateur en utilisant les données de signalisation ${e}_{n}^{i}$.

Le procédé comprend une étape 102 de collecte des données de signalisation ${e}_{n}^{i}$ sur une durée d'acquisition, par exemple de plusieurs jours ou plusieurs mois, durant laquelle l'appareil mobile *i* est utilisé. Chaque donnée de signalisation ${e}_{n}^{i}$ comprend un horodatage ${t}_{n}^{i}$ associé à des coordonnées ${l}_{n}^{i}$ de l'antenne ${c}_{n}^{i}$ communiquant avec l'appareil mobile i pour générer ladite donnée de signalisation ${e}_{n}^{i}$. Les coordonnées ${l}_{n}^{i}$ de l'antenne ${c}_{n}^{i}$ peuvent être déterminées par la longitude et la latitude de l'antenne ${c}_{n}^{i}$. Les données de signalisation ${e}_{n}^{i}$ forme une trace de téléphonie mobile *Tⁱ.*

Les données de signalisation ${e}_{n}^{i}$ de l'appareil mobile *i* peuvent être collectées pour différents évènements de communication de l'appareil mobile, par exemple pour les évènements suivant :
- les communications vocales ou l'échange de messages textes SMS ( « Short Message Service » en anglais),
- les transferts intercellulaires,
- les mises à jour des zones de localisation (LA, « localisation area » en anglais) et des zones de suivi (TA, « tracking area » en anglais), c'est-à-dire les mises à jours lors de changements de cellule ou d'antenne entre une zone LA, généralement couverte par un réseau 2G/3G, et une zone TA, généralement couverte par un réseau 4G,
- les demandes périodiques émises par le réseau de téléphonie mobile pour mettre à jour l'emplacement de l'appareil mobile,
- les connexions et/ou les déconnexions du réseau de téléphonie mobile, c'est-à-dire lorsque l'appareil mobile rejoint ou quitte le réseau de téléphonie mobile à son activation ou sa désactivation, et/ou
- les échanges de données internet, qui comprennent entre autre les requêtes d'affectation de ressources internet à des applications mobiles en cours d'exécution par l'appareil mobile.

Le procédé comprend ensuite une étape 104 de calcul d'un temps cumulé d'une série de pluralité de données de signalisation ${e}_{n}^{i}$ qui se succèdent et qui sont générées en lien avec une unique antenne ${c}_{n}^{i}$ commune à ladite pluralité de données de signalisation ${e}_{n}^{i}$. Etant donné le nombre important des données de signalisation ${e}_{n}^{i}$, cette étape 102 permet de fournir une estimation de la durée pendant lequel l'appareil mobile i est associé à une antenne donnée ${c}_{n}^{i}$, en limitant les ressources de calcul nécessaires. Le temps cumulé peut être calculé pour des données de signalisation ${e}_{n}^{i}$ collectées pour un jour donné.

Pour chaque série de pluralité de données de signalisation ${e}_{n}^{i}$, le temps cumulé calculé à l'étape précédente est comparé à un premier seuil temporel *T_{w}.* Si le temps cumulé est supérieur au premier seuil temporel *T_{w},* ladite série est labélisée comme étant une série statique ${a}_{k}^{i}$, avec *k* un entier. Le premier seuil temporel *T_{w}* est égal à 20 minutes mais peut prendre une autre valeur comprise entre 5 et 60 minutes. Cette étape permet d'établir un ensemble de K séries statiques ${A}^{i} = \left\{{a}_{1}^{i},…{a}_{k}^{i},…,{a}_{K}^{i}\right\}$*.*

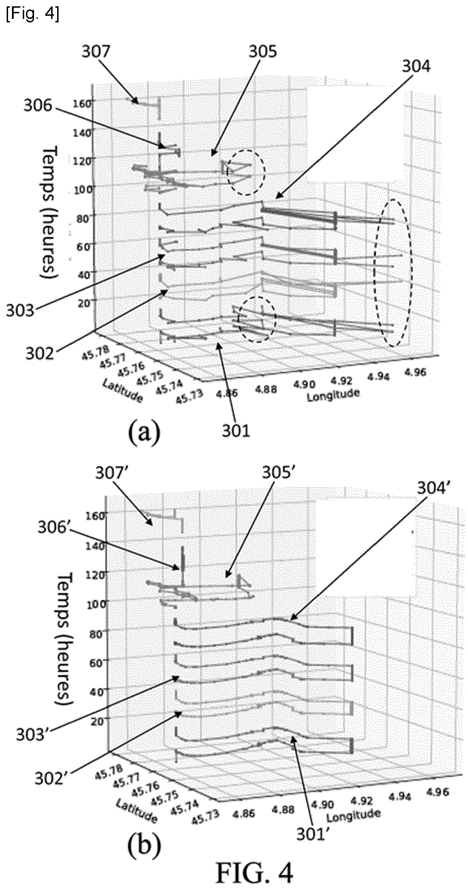

Les données de signalisation sont sensibles aux phénomènes d'oscillation caractérisant le réseau téléphonie mobile. Ces phénomènes se traduisent par le changement d'antennes ${c}_{n}^{i}$ dans une série de données de signalisation ${e}_{n}^{i}$ alors que l'appareil mobile *i* ne s'est pas déplacé. Ces phénomènes peuvent entrainer la détermination erronée d'un déplacement de l'appareil mobile *i*. La figure 4a montre des données de signalisation collectées sur 7 jours et représentées par les coordonnées *lⁱ* , 301, 302, 303, 304, 305, 306 et 307, des antennes avec lesquelles l'appareil mobile a communiqué durant ladite journée. Les données de signalisation entourées par des cercles en pointillées sur la figure 4a montrent un changement d'antennes qui ne correspond à un mouvement de l'appareil mobile. Au cours d'une journée d'utilisation de l'appareil mobile, un utilisateur peut avoir plusieurs séries statiques, et chacune peut être composée d'une ou plusieurs antennes.

Pour limiter ces phénomènes d'oscillation, des critères de sélection sont appliquées, à l'étape 108.

D'abord, on détermine toutes les séries statiques successives ${a}_{k}^{i}$ et ${a}_{k + 1}^{i}$ qui comprennent au moins une seule antenne commune ${c}_{n}^{i}$ auxdites séries statiques successives ${a}_{k}^{i}$ et ${a}_{k + 1}^{i}$. Ensuite, on relève les antennes ${c}_{m \neq n}^{i}$, avec m un entier, qui sont associées à des données de signalisation intermédiaires ${e}_{n}^{i}$, avec *n* entre *k* et *k +* 1, et qui sont différentes de ladite seule antenne commune ${c}_{n}^{i}$.

A l'étape 110, si le nombre des antennes ${c}_{m \neq n}^{i}$ est inférieure à un seuil d'antennes *N*₀, les données de signalisation des séries statiques successives ${a}_{k}^{i}$ et ${a}_{k + 1}^{i}$ sont fusionnées en une seule série statique ${a}_{k}^{i}$, qui remplace dans l'ensemble A*ⁱ* les séries statiques successives ${a}_{k}^{i}$ et ${a}_{k + 1}^{i}$. Le seuil d'antennes *N*₀ est égal à 2, mais peut être compris entre 1 et 10.

Les données de signalisation intermédiaires, dues aux phénomènes d'oscillation, sont de préférence retirées de la trace de téléphonie mobile *Tⁱ* pour limiter le bruit non informatif dans les données.

A l'étape 112, les données de signalisation ${e}_{n}^{i}$ restants, et qui ne font pas partie de l'ensemble A*ⁱ* des séries statiques, sont ajoutées à des séries mobiles ${m}_{h}^{i}$, avec *h* un entier, correspondant à des sessions de mobilité de l'utilisateur soit des séquences continues dans le temps d'événements mobiles de l'appareil mobile. Les inventeurs ont constaté la détermination des séries mobiles ${m}_{h}^{i}$ présente une précision de 80% et un rappel de 96%.

La figure 4b montre des données de signalisation 301', 302', 303', 304', 305', 306' et 307' correspondant respectivement aux données de signalisation 301-307 de la figure 4a à l'issue de l'étape 108. Le bruit, correspondant aux données de signalisation 301-307 entourés dans la figure 4a, est lissé par cette étape 108.

L'étape 112 permet de construire un ensemble de séries mobiles ${M}^{i} = \left\{{m}_{1}^{i},…{m}_{h}^{i},…,{m}_{H}^{i}\right\}$ , avec *H* . Chaque série mobile ${m}_{h}^{i}$ comprend les données de signalisation qui appartiennent aux séries statiques qui précèdent et suivent immédiatement ladite série mobile ${m}_{h}^{i}$. En particulier, chaque série mobile ${m}_{h}^{i}$ comprend la dernière donnée de signalisation qui appartient à la série statique qui précède la série mobile ${m}_{h}^{i}$. En particulier, chaque série mobile ${m}_{h}^{i}$ comprend la première donnée de signalisation qui appartient à la série statique qui suit la série mobile ${m}_{h}^{i}$.

Le procédé peut comprendre une étape supplémentaire pour filtrer les séries statiques de l'ensemble A*ⁱ* , obtenues à l'issue de l'étape 108, sur la base de leurs durées. Pour cela, le temps cumulé pour chaque série statique ${a}_{k}^{i}$ est calculé et seules les séries statiques ${a}_{k}^{i}$ présentant un temps cumulé supérieur à un second seuil temporel *Tₛ* sont retenues dans l'ensemble A*ⁱ* . Ce second seuil temporel *Tₛ* correspond à la durée minimale estimée d'une activité statique, de sorte que les laps court d'immobilité ne sont pas inclus dans l'ensemble A*ⁱ* de séries statiques, tels que les périodes d'attente à des feux rouges pour les déplacements des piétons ou des véhicules, ou les temps d'arrêt aux arrêts pour les déplacements en bus. Le second seuil temporel *Tₛ* est égal à 20 minutes, mais peut prendre une autre valeur comprise entre 5 et 60 minutes.

Le procédé peut comprendre une étape de détermination des positions statiques correspondant à des positions où l'utilisateur est resté immobile pendant un temps supérieur au second seuil temporel *Tₛ*. Cette étape comprend d'abord le calcul, pour chaque série statique ${a}_{k}^{i}$ de l'ensemble A*ⁱ* , du centroïde des coordonnées ${l}_{n}^{i}$ des antennes associées aux données de signalisation ${e}_{n}^{i}$ de ladite série statique ${a}_{k}^{i}$. Le centroïde est équivalent au centre de gravité ou encore au barycentre des coordonnées ${l}_{n}^{i}$. Ainsi, chaque série statique ${a}_{k}^{i}$ est associée à un centroïde. L'ensemble A*ⁱ* des séries statiques ${a}_{k}^{i}$ est ensuite partitionné sur la base des centroïde, par exemple par l'algorithme DBSCAN (« density-based spatial clustering of applications with noise » en anglais). Ceci résulte en plusieurs partitions de séries statiques ${a}_{k}^{i}$, chaque partition de séries statiques ${a}_{k}^{i}$ correspondant à une session d'activité statique de l'utilisateur. La position des séries statiques ${a}_{k}^{i}$ appartenant à une même partition est déterminée comme étant le barycentre des centroïdes des séries statiques ${a}_{k}^{i}$ de cette partition.

A l'issue de l'étape 112, l'ensemble 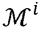 des séries mobiles ${m}_{h}^{i}$ est déterminé et comprend l'ensemble des sessions de déplacement de l'utilisateur pendant la durée d'acquisition. Ces sessions de déplacement peuvent correspondre à une même trajectoire que suit l'utilisateur à des moments différents, par exemple de façon journalière. Pour déterminer les trajectoires de déplacement de façon précise, les données de signalisation correspondant à des trajectoires similaires sont mutualisées.

Pour cela, le procédé comprend une étape 202 pour déterminer un ensemble ${M}_{R}^{i}$ de trajectoires récurrentes comprenant les séries mobiles ${m}_{h}^{i}$ correspondant à une seule et même trajectoire.

L'étape 202 comprend le calcul d'un paramètre de similarité entre chaque paire de séries mobiles ${m}_{{h}_{1}}^{i} , {m}_{{h}_{2}}^{i}$ avec *h*₁ ≠ *h*₂. L'étape 202 comprend ensuite le partitionnement des séries mobiles sur la base du paramètre de similarité.

En particulier, l'étape 202 comprend pour chaque paire de séries mobiles ( ${m}_{{h}_{1}}^{i} , {m}_{{h}_{2}}^{i}$) le calcul de la distance de Hausdorff selon la formule qui suit :$\begin{matrix}{d}_{H} \left({m}_{{h}_{1}}^{i}, {m}_{{h}_{2}}^{i}\right) = max \left\{D\left({m}_{{h}_{1}}^{i}, {m}_{{h}_{2}}^{i}\right),D\left({m}_{{h}_{2}}^{i}, {m}_{{h}_{1}}^{i}\right)\right\} , \\ D \left({m}_{{h}_{1}}^{i}, {m}_{{h}_{2}}^{i}\right) = {sup}_{{l}_{{n}_{1}}^{i} ∈ {m}_{{h}_{1}}^{i}} {inf}_{{l}_{{n}_{2}}^{i} ∈ {m}_{{h}_{2}}^{i}} d \left({l}_{{n}_{1}}^{i}, {l}_{{n}_{2}}^{i}\right)\end{matrix}$

Avec *d*(·,·) étant la distance géodésique.

Ce calcul résulte en une matrice comprenant des distances par paires de séries mobiles ( ${m}_{{h}_{1}}^{i} , {m}_{{h}_{2}}^{i}$).

L'étape 202 comprend ensuite l'application de l'algorithme de rationnement DBSCAN sur cette matrice pour obtenir une ou plusieurs partitions. On distingue alors dans l'ensemble 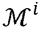 des séries mobiles :
(i) les séries mobiles ${m}_{h}^{i}$ appartenant à une des partions, c'est-à-dire qui se correspondent à une trajectoire récurrente de la mobilité de l'utilisateur, et qui sont incluses dans l'ensemble ${M}_{R}^{i}$ de trajectoires récurrentes, et
(ii) les séries mobiles ${m}_{h}^{i}$ exclues des partions qui représentent des mouvements uniques de l'utilisateur, et qui sont incluses dans un ensemble ${M}_{O}^{i} = {M}^{i} \ {M}_{R}^{i}$*.*

Le procédé comprend ensuite une étape 204, pour chaque partition obtenue par DBSCAN, de calcul la durée moyenne des séries mobiles ${m}_{h}^{i}$ appartenant à ladite partition. Cette durée moyenne correspond au temps usuel que prend l'utilisateur pour parcourir la trajectoire de ladite partition. Les paramètres de DBSCAN comprennent une première distance maximale et une seconde distance maximale. La première distance maximale est comprise entre 0.1 et 0.2 Km, en particulier égale à 0.15 Km. La seconde distance maximale est comprise entre 2 et 3 Km, en particulier égale à 2.5 Km.

A l'étape 206, on exclut de la partition les séries mobiles ${m}_{h}^{i}$ de ladite partition dont la durée s'écarte, de la médiane des durées desdites séries mobiles ${m}_{h}^{i}$, de 50% ou plus. En effet, ces séries mobiles exclues ne sont pas représentatives de la mobilité habituelle de l'utilisateur.

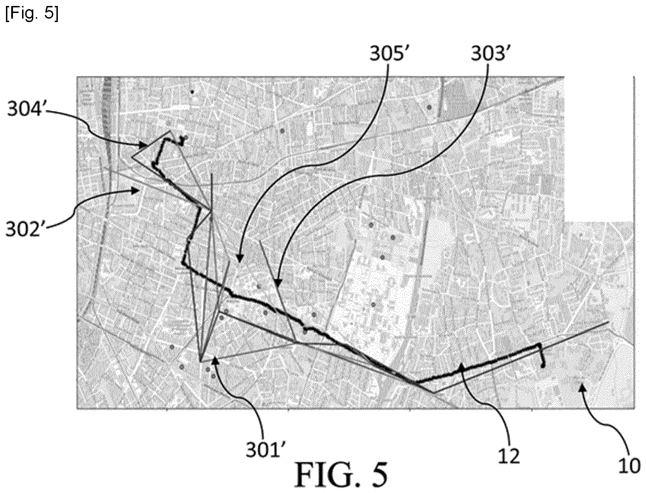

La figure 5 représente une partition correspondant à une même trajectoire 12 et comprenant les données de signalisation 301' à 305'.

A l'étape 208, les séries mobiles, restantes de l'étape 206 de filtration, sont mises à l'échelle temporellement, c'est-à-dire étirées ou comprimées, dans le temps de manière à correspondre à la durée moyenne des séries mobiles ${m}_{h}^{i}$, calculée à l'étape 204.

Les séries mobiles ${m}_{h}^{i}$, telles que mises à l'échelle, sont ensuite échantillonnées, à l'étape 210, selon un pas de temps déterminé. Le pas de temps déterminé est égal à 1 minute, mais peut être compris entre 0.5 et 2 minutes.

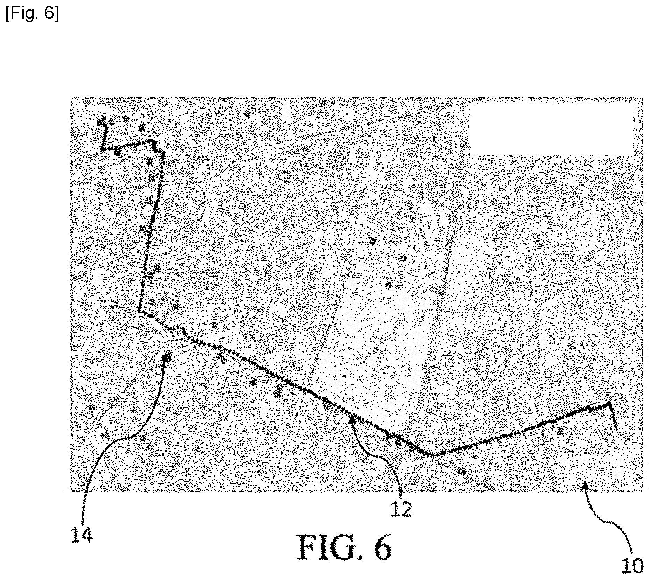

Enfin, à l'étape 212, les coordonnées spatiales ${l}_{n}^{i}$ de toutes les différentes données de signalisation ${e}_{n}^{i}$, des séries mobiles ${m}_{h}^{i}$ échantillonnées, de chaque pas de temps sont moyennées. Ces moyennes correspondent aux positions 14 de la trajectoire reconstruite à chaque pas de temps, tel que représenté sur la figure 6. Les positions 14 de la trajectoire reconstruite sont obtenues avec une précision de l'ordre de 190 m par rapport à la trajectoire réelle 12 telle que mesurée par GPS.

Le procédé peut comprendre une étape de détermination d'une trajectoire pour chaque série mobile ${m}_{h}^{i}$ de la partition à partir de la trajectoire reconstruite à l'étape 212. Pour cela, la trajectoire reconstruite est ramenée à la durée correspondante de la série mobile ${m}_{h}^{i}$ par compression ou étirement, afin de rester fidèle au temps initial de parcours de la trajectoire de ladite série mobile ${m}_{h}^{i}$.

## Revendications

1. Procédé de détermination d'un ensemble de trajectoires d'un utilisateur portant un appareil mobile (*i*) dans un réseau de téléphonie mobile, sur un territoire donné, comprenant une pluralité d'antennes ( ${c}_{n}^{i}$), le procédé est **caractérisé en ce qu'**il consiste essentiellement à :
a. collecter des données de signalisation ( ${e}_{n}^{i}$) dudit appareil mobile (*i*), chaque donnée de signalisation comprenant un horodatage ( ${t}_{n}^{i}$) associé à des coordonnées ( ${l}_{n}^{i}$) d'une antenne communiquant avec ledit appareil mobile,
b. déterminer au moins une série de données de signalisation ( ${e}_{n}^{i}$) successives associées à une seule antenne commune, et calculer un temps cumulé pour chaque série de données de signalisation,
c. pour chaque série de données de signalisation ( ${e}_{n}^{i}$), lorsque le temps cumulé est supérieur à un premier seuil temporel (*T_{w}*), labeliser ladite série de données de signalisation comme étant une série statique ( ${a}_{k}^{i}$),
d. comparer deux séries statiques successives, et lorsqu'une première série statique ( ${a}_{k}^{i}$) et une seconde série statique ( ${a}_{k + 1}^{i}$) successives sont associées à une même antenne ( ${c}_{n}^{i}$), et lorsque des données de signalisation ( ${e}_{n}^{i}$) intermédiaires situées entre la première série statique ( ${a}_{k}^{i}$) et la seconde série statique ( ${a}_{k + 1}^{i}$) sont associées à d'autres antennes, différentes de l'antenne en commun ; et que le nombre des antennes associées aux données de signalisation intermédiaires est inférieur à un seuil d'antennes (*N*₀), fusionner la première série statique ( ${a}_{k}^{i}$) et la seconde série statique ( ${a}_{k + 1}^{i}$) en une seule série statique ( ${a}_{k}^{i}$),
f. construire un ensemble ( 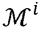 ) de séries mobiles ( ${m}_{h}^{i}$) comprenant les données de signalisation ( ${e}_{n}^{i}$) exclues des séries statiques ${a}_{k}^{i}$, et
g.
déterminer l'ensemble ( 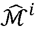 ) de trajectoires à partir dudit ensemble ( 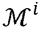 ) de séries mobiles ( ${m}_{h}^{i}$),
procédé dans lequel à l'étape d, les données de signalisation intermédiaires sont supprimées ou stockées dans une série distincte des séries statiques et des séries mobiles, procédé dans lequel l'étape g comprend les sous-étapes suivantes :
g1. construire un ensemble ( ${M}_{R}^{i}$) de trajectoires récurrentes comprenant les séries mobiles correspondant à une même trajectoire,
g2. déterminer une durée moyenne de ladite trajectoire à partir de l'ensemble ( ${M}_{R}^{i}$) de trajectoires récurrentes,
g3. pour chaque série mobile déterminée à l'étape g1, mettre temporellement à l'échelle ladite série mobile pour avoir une durée totale égale à la durée moyenne,
g4. pour chaque série mobile mise à l'échelle à l'étape g3 échantillonner ladite série mobile selon un pas de temps déterminé.

2. Procédé selon la revendication 1, dans lequel l'étape g1 comprend les sous-étapes suivantes :
g11. pour chaque paire de séries mobiles ( ${m}_{{h}_{1}}^{i} , {m}_{{h}_{2}}^{i}$), déterminer la distance de Hausdorff ( ${d}_{H} \left({m}_{{h}_{1}}^{i}, {m}_{{h}_{2}}^{i}\right)$), entre lesdites séries mobiles ( ${m}_{{h}_{1}}^{i} , {m}_{{h}_{2}}^{i}$),
g12. déterminer l'ensemble ( ${M}_{R}^{i}$) de trajectoires récurrentes par partitionnement des distances de Hausdorff ( ${d}_{H} \left({m}_{{h}_{1}}^{i}, {m}_{{h}_{2}}^{i}\right)$) obtenues à l'étape g11.

3. Procédé selon la revendication 1 ou 2, dans lequel l'étape g comprend en outre après la sous-étape g2, les sous-étapes suivantes :
g21. calculer la médiane des durées de trajectoires de l'ensemble ( ${M}_{R}^{i}$) des trajectoires récurrentes,
g22. filtrer de l'ensemble ( ${M}_{R}^{i}$) de trajectoires récurrentes, les séries mobiles présentant une durée de trajectoire supérieure à 50% de ladite médiane calculée.

4. Procédé selon la revendication 1 à 3, dans lequel chaque trajectoire de l'ensemble ( 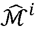 ) de trajectoires comprend les moyennes des coordonnées ( ${l}_{n}^{i}$) de l'antenne des données de signalisation à chaque pas de temps déterminé.

5. Procédé selon l'une des revendications précédentes, comprenant, après l'étape d, pour chaque série statique ( ${a}_{k}^{i}$), une étape e consistant à retirer le label statique de ladite série statique lorsque le temps cumulé pour cette série statique est inférieur à un second seuil temporel (*Tₛ*).

6. Procédé selon la revendication précédente, comprenant, après l'étape e, une étape consistant à déterminer une position statique de l'utilisateur (i), ladite étape comprenant :
- calculer, pour chaque série statique ( ${a}_{k}^{i}$), un centroïde des coordonnées ( ${l}_{n}^{i}$) des antennes associées à des données de signalisation ( ${e}_{n}^{i}$) compris dans ladite série statique,
- partitionnement des centroïdes obtenus en plusieurs partitions comprenant les centroïdes tels que partitionnés et les séries statiques associées auxdits centroïdes,
- calculer, pour chaque partition, un barycentre des centroïdes,
- affecter à chaque série statique une position statique, ladite position statique étant le barycentre de la partition comprenant ladite série statique.

7. Procédé selon l'une des revendications précédentes en combinaison avec la revendication 5, dans lequel le premier seuil temporel (*T_{w}*) et/ou le second seuil temporel (*Tₛ*) est compris entre 5 et 60 minutes.

8. Procédé selon l'une des revendications précédentes, dans lequel le seuil d'antennes (*N*₀) est compris entre 1 et 10.

9. Procédé selon la revendication 2, dans lequel l'étape g12 est réalisée par l'algorithme DBSCAN, density-based spatial clustering of applications with noise » en anglais.

10. Procédé de caractérisation de la mobilité d'une population d'une agglomération, le procédé comprenant les étapes suivantes :
1. déterminer des ensembles ( 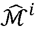 ) de trajectoires selon l'une quelconque des revendications précédentes pour une pluralité d'utilisateurs,
2. déterminer des trajectoires communes pour un nombre déterminé d'utilisateurs (i).

11. Procédé selon la revendication précédente, comprenant la superposition d'une ou plusieurs trajectoires communes à une carte du territoire donné.

12. Dispositif de traitement de données comprenant un contrôleur centralisé comportant une mémoire et permettant la mise en œuvre du procédé selon l'une des revendications 1 à 10 ou du procédé 10 ou 11.

13. Programme d'ordinateur comprenant des instructions qui, dès lors qu'elles sont chargées et implémentées sur un ordinateur, permettent la mise en œuvre du procédé selon l'une au moins des revendications 1 à 10 ou du procédé 10 ou 11.

14. Support d'enregistrement lisible par ordinateur comprenant des instructions qui, lorsqu'elles sont exécutées par un ordinateur, conduisent celui-ci à mettre en œuvre le procédé selon l'une au moins des revendications 1 à 10 ou du procédé 10 ou 11.

## Patentansprüche

1. Verfahren zur Bestimmung eines Satzes von Trajektorien eines Benutzers, der ein mobiles Gerät (i) in einem Mobilfunknetz über ein gegebenes Gebiet trägt, umfassend eine Vielzahl von Antennen ( ${c}_{n}^{i}$), wobei das Verfahren **dadurch gekennzeichnet ist, dass** es im Wesentlichen aus Folgendem besteht:
a. Sammeln von Signalisierungsdaten ( ${e}_{n}^{i}$) des mobilen Geräts (i), wobei jede Signalisierungsdatum einen Zeitstempel ( ${t}_{n}^{i}$) umfasst, der mit Koordinaten ( ${l}_{n}^{i}$) einer mit dem mobilen Gerät kommunizierenden Antenne verbunden ist,
b. Bestimmen mindestens einer Reihe von aufeinanderfolgenden Signalisierungsdaten ( ${e}_{n}^{i}$), die mit einer einzigen gemeinsamen Antenne verbunden sind, und Berechnen einer kumulativen Zeit für jede Reihe von Signalisierungsdaten,
c. für jede Reihe von Signalisierungsdaten ( ${e}_{n}^{i}$), wenn die kumulative Zeit größer als eine erste Zeitschwelle (T_{w}) ist, Kennzeichnen der Reihe von Signalisierungsdaten als eine statische Reihe ( ${a}_{k}^{i}$),
d. Vergleichen von zwei aufeinanderfolgenden statischen Reihen, und wenn eine erste statische Reihe ( ${a}_{k}^{i}$) und eine zweite aufeinanderfolgende statische Reihe ( ${a}_{k + 1}^{i}$) mit derselben Antenne ( ${c}_{n}^{i}$) verbunden sind, und wenn dazwischenliegende Signalisierungsdaten ( ${e}_{n}^{i}$), die sich zwischen der ersten statischen Reihe ( ${a}_{k}^{i}$) und der zweiten statischen Reihe ( ${a}_{k + 1}^{i}$) befinden, mit anderen Antennen verbunden sind, die sich von der gemeinsamen Antenne unterscheiden; und wenn die Anzahl der mit den dazwischenliegenden Signalisierungsdaten verbundenen Antennen niedriger als eine Antennenschwelle (N₀) ist, Zusammenführen der ersten statischen Reihe ( ${a}_{k}^{i}$) und der zweiten statischen Reihe ( ${a}_{k + 1}^{i}$) zu einer einzigen statischen Reihe ( ${a}_{k}^{i}$),
f. Erstellen eines Satzes ( 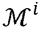 ) von mobilen Reihen ( ${m}_{h}^{i}$), der die von den statischen Reihen ( ${a}_{k}^{i}$) ausgeschlossenen Signalisierungsdaten ( ${e}_{n}^{i}$) umfasst, und
g. Bestimmen des Satzes ( 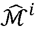 ) von Trajektorien aus dem Satz ( 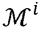 ) von mobilen Reihen ( ${m}_{h}^{i}$),
wobei in Schritt d die dazwischenliegenden Signalisierungsdaten gelöscht oder in einer von den statischen Reihen und den mobilen Reihen verschiedenen Reihe gespeichert werden,
wobei Schritt g die folgenden Unterschritte umfasst:
g1. Erstellen eines Satzes (M_{R}ⁱ) von wiederkehrenden Trajektorien, der die mobilen Reihen umfasst, die derselben Trajektorie entsprechen,
g2. Bestimmen einer durchschnittlichen Dauer der Trajektorie aus dem Satz (M_{R}ⁱ) von wiederkehrenden Trajektorien,
g3. für jede in Schritt (g1) bestimmte mobile Reihe, zeitliches Skalieren der mobilen Reihe, um eine Gesamtdauer zu haben, die der durchschnittlichen Dauer entspricht,
g4. für jede in Schritt g3 skalierte mobile Reihe, Abtasten der mobilen Reihe gemäß einem bestimmten Zeitschritt.

2. Verfahren nach Anspruch 1, wobei Schritt g1 die folgenden Unterschritte umfasst:
g11. für jedes Paar mobiler Reihen ( ${m}_{{h}_{1}}^{i} , {m}_{{h}_{2}}^{i}$), Bestimmen des Hausdor>-Abstands ( ${d}_{H} \left({m}_{{h}_{1}}^{i}, {m}_{{h}_{2}}^{i}\right)$) zwischen den mobilen Reihen ( ${m}_{{h}_{1}}^{i} , {m}_{{h}_{2}}^{i}$),
g12. Bestimmen des Satzes (M_{R}ⁱ) von wiederkehrenden Trajektorien durch Partitionierung der in Schritt g11 erhaltenen Hausdor>-Abstände ( ${d}_{H} \left({m}_{{h}_{1}}^{i}, {m}_{{h}_{2}}^{i}\right)$).

3. Verfahren nach Anspruch 1 oder 2, wobei Schritt g2 ferner nach dem Unterschritt g2 die folgenden Unterschritte umfasst:
g21. Berechnen des Medians der Dauern von Trajektorien des Satzes (M_{R}ⁱ) der wiederkehrenden Trajektorien,
g22. Filtern aus dem Satz (M_{R}ⁱ) der wiederkehrenden Trajektorien der mobilen Reihen, die eine Trajektoriendauer von mehr als 50 % des berechneten Medians aufweisen.

4. Verfahren nach den Ansprüchen 1 bis 3, wobei jede Trajektorie des Satzes ( 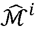 ) von Trajektorien die Mittelwerte der Koordinaten ( ${l}_{n}^{i}$) der Antenne der Signalisierungsdaten bei jedem bestimmten Zeitschritt umfasst.

5. Verfahren nach einem der vorhergehenden Ansprüche, umfassend nach Schritt d,
für jede statische Reihe ( ${a}_{k}^{i}$), einen Schritt e, der darin besteht, die statische Kennzeichnung der statischen Reihe zu entfernen, wenn die kumulative Zeit für diese statische Reihe niedriger als eine zweite Zeitschwelle (Tₛ) ist.

6. Verfahren nach dem vorhergehenden Anspruch, umfassend nach Schritt e einen Schritt, der darin besteht, eine statische Position des Benutzers (i) zu bestimmen, wobei der Schritt umfasst:
• Berechnen, für jede statische Reihe ( ${a}_{k}^{i}$), eines Zentroids der Koordinaten ( ${l}_{n}^{i}$) der Antennen, die mit den in der statischen Reihe enthaltenen Signalisierungsdaten ( ${e}_{n}^{i}$) verbunden sind,
• Partitionierung der erhaltenen Zentroide in mehrere Partitionen, die die so partitionierten Zentroide und die mit den Zentroiden verbundenen statischen Reihen umfassen,
• Berechnen, für jede Partition, eines Baryzentrums der Zentroide,
• Zuweisen einer statischen Position zu jeder statischen Reihe, wobei die statische Position das Baryzentrum der Partition ist, die die statische Reihe umfasst.

7. Verfahren nach einem der vorhergehenden Ansprüche in Kombination mit Anspruch 5, wobei die erste Zeitschwelle (T_{w}) und/oder die zweite Zeitschwelle (Tₛ) zwischen 5 und 60 Minuten liegt.

8. Verfahren nach einem der vorhergehenden Ansprüche, wobei die Antennenschwelle (N₀) zwischen 1 und 10 liegt.

9. Verfahren nach Anspruch 2, wobei Schritt (g12) durch den DBSCAN-Algorithmus "density-based spatial clustering of applications with noise" auf Englisch durchgeführt wird.

10. Verfahren zur Charakterisierung der Mobilität einer Bevölkerung eines Ballungsraums, wobei das Verfahren die folgenden Schritte umfasst:
(1) Bestimmen von Sätzen ( 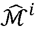 ) von Trajektorien nach einem der vorhergehenden Ansprüche für eine Vielzahl von Benutzern,
(2) Bestimmen von gemeinsamen Trajektorien für eine bestimmte Anzahl von Benutzern (i).

11. Verfahren nach dem vorhergehenden Anspruch, umfassend die Überlagerung einer oder mehrerer gemeinsamer Trajektorien auf einer Karte des gegebenen Gebiets.

12. Datenverarbeitungsvorrichtung, umfassend eine zentralisierte Steuerung mit einem Speicher, die die Implementierung des Verfahrens nach einem der Ansprüche 1 bis 10 oder des Verfahrens nach Anspruch 10 oder 11 ermöglicht.

13. Computerprogramm, das Anweisungen umfasst, die, wenn sie auf einem Computer geladen und implementiert werden, die Implementierung des Verfahrens nach einem der Ansprüche 1 bis 10 oder des Verfahrens nach Anspruch 10 oder 11 ermöglichen.

14. Computerlesbares Aufzeichnungsmedium, das Anweisungen umfasst, die, wenn sie von einem Computer ausgeführt werden, diesen veranlassen, das Verfahren nach einem der Ansprüche 1 bis 10 oder des Verfahrens nach Anspruch 10 oder 11 zu implementieren.

## Claims

1. A method for determining a set of trajectories of a user carrying a mobile device (i) in a mobile telephony network, over a given territory, comprising a plurality of antennas ( ${c}_{n}^{i}$), the method being **characterized in that** it essentially consists of:
a. collecting signaling data ( ${e}_{n}^{i}$) of said mobile device (i), each signaling datum comprising a timestamp ( ${t}_{n}^{i}$) associated with coordinates ( ${l}_{n}^{i}$) of an antenna communicating with said mobile device,
b. determining at least one series of successive signaling data ( ${e}_{n}^{i}$) associated with a single common antenna, and calculating a cumulative time for each series of signaling data,
c. for each series of signaling data ( ${e}_{n}^{i}$), when the cumulative time is greater than a first time threshold (T_{w}), labeling said series of signaling data as being a static series ( ${a}_{k}^{i}$),
d. comparing two successive static series, and when a first static series ( ${a}_{k}^{i}$) and a second successive static series ( ${a}_{k + 1}^{i}$) are associated with a same antenna ( ${c}_{n}^{i}$), and when intermediate signaling data ( ${e}_{n}^{i}$) located between the first static series ( ${a}_{k}^{i}$) and the second static series ( ${a}_{k + 1}^{i}$) are associated with other antennas, di,erent from the common antenna; and when the number of antennas associated with the intermediate signaling data is lower than an antenna threshold (N₀), merging the first static series ( ${a}_{k}^{i}$) and the second static series ( ${a}_{k + 1}^{i}$) into a single static series ( ${a}_{k}^{i}$),
f. constructing a set ( 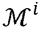 ) of mobile series ( ${m}_{h}^{i}$) comprising the signaling data ( ${e}_{n}^{i}$) excluded from the static series ( ${a}_{k}^{i}$), and
g. determining the set ( 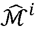 ) of trajectories from said set ( 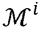 ) of mobile series ( ${m}_{h}^{i}$),
wherein in step d, the intermediate signaling data are deleted or stored in a series distinct from the static series and the mobile series,
wherein step g comprises the following sub-steps:
g1. constructing a set (M_{R}ⁱ) of recurrent trajectories comprising the mobile series corresponding to a same trajectory,
g2. determining an average duration of said trajectory from the set (M_{R}ⁱ) of recurrent trajectories,
g3. for each mobile series determined in step g1, time-scaling said mobile series to have a total duration equal to the average duration,
g4. for each mobile series scaled in step g3, sampling said mobile series according to a determined time step.

2. Method according to claim 1, wherein step g1 comprises the following sub-steps:
g11. for each pair of mobile series ( ${m}_{{h}_{1}}^{i} , {m}_{{h}_{2}}^{i}$), determining the Hausdorff distance ( ${d}_{H} \left({m}_{{h}_{1}}^{i}, {m}_{{h}_{2}}^{i}\right)$), between said mobile series ( ${m}_{{h}_{1}}^{i} , {m}_{{h}_{2}}^{i}$),
g12. determining the set (M_{R}ⁱ) of recurrent trajectories by partitioning the Hausdorff distances ( ${d}_{H} \left({m}_{{h}_{1}}^{i}, {m}_{{h}_{2}}^{i}\right)$) obtained in step g11.

3. Method according to claim 1 or 2, wherein step g2 further comprises after substep g2, the following sub-steps:
g21. calculating the median of the durations of trajectories of the set (M_{R}ⁱ) of recurrent trajectories,
g22. filtering from the set (M_{R}ⁱ) of recurrent trajectories, the mobile series having a trajectory duration greater than 50% of said calculated median.

4. Method according to claims 1 to 3, wherein each trajectory of the set ( 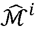 of trajectories comprises the averages of the coordinates ( ${l}_{n}^{i}$) of the antenna of the signaling data at each determined time step.

5. Method according to one of the preceding claims, comprising, after step d,
for each static series ( ${a}_{k}^{i}$), a step e consisting of removing the static label of said static series when the cumulative time for this static series is lower than a second time threshold (Tₛ).

6. Method according to the preceding claim, comprising, after step e, a step consisting of determining a static position of the user (i), said step comprising:
• calculating, for each static series ( ${a}_{k}^{i}$), a centroid of the coordinates ( ${l}_{n}^{i}$) of the antennas associated with signaling data ( ${e}_{n}^{i}$) comprised in said static series,
• partitioning the centroids obtained into several partitions comprising the centroids as partitioned and the static series associated with said centroids,
• calculating, for each partition, a barycenter of the centroids,
• assigning to each static series a static position, said static position being the barycenter of the partition comprising said static series.

7. Method according to one of the preceding claims in combination with claim 5, wherein the first time threshold (T_{w}) and/or the second time threshold (Tₛ) is comprised between 5 and 60 minutes.

8. Method according to one of the preceding claims, wherein the antenna threshold (N₀) is comprised between 1 and 10.

9. Method according to claim 2, wherein step g12 is performed by the DBSCAN algorithm, density-based spatial clustering of applications with noise.

10. Method for characterizing the mobility of a population of an agglomeration, the method comprising the following steps:
(1) determining sets ( 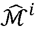 ) of trajectories according to any one of the preceding claims for a plurality of users,
(2) determining common trajectories for a determined number of users (i).

11. Method according to the preceding claim, comprising the superimposition of one or more common trajectories on a map of the given territory.

12. Data processing device comprising a centralized controller having a memory and enabling the implementation of the method according to one of claims 1 to 10 or of the method of claim 10 or 11.

13. Computer program comprising instructions which, when they are loaded and implemented on a computer, enable the implementation of the method according to any one of claims 1 to 10 or of the method of claim 10 or 11.

14. Computer-readable recording medium comprising instructions which, when they are executed by a computer, cause the latter to implement the method according to any one of claims 1 to 10 or of the method of claim 10 or 11.
